# EUROPEAN PATENT APPLICATION

(11) **EP 1 462 600 A1**
(43) Date of publication of application: **29.09.2004**
(21) Application number: 02786002.2
(22) Date of filing: 02.12.2002
(51) Int. Cl.: E05D 11/08, H04N 101/00, E05D 7/00, H04M 1/02, H04N 5/225

(54) **HINGE DEVICE**

(30) Priority: 06.12.2001 JP 2001372553
(71) Applicant: Sugatsune Kogyo Co., Ltd., Tokyo 101-8633 (JP)
(72) Inventor: GOTO, Katsumi, c/o SUGATSUNE KOGYO CO., LTD., Tokyo 101-8633 (JP); TOMIZAWA, Kenji, c/o SUGATSUNE KOGYO CO., LTD., Tokyo 101-8633 (JP)
(74) Representative: Hallybone, Huw George
(86) International application number: PCT/JP2002/012609
(87) International publication number: WO 2003/048490

(57) **Abstract**

A hinge main body 2 having a frame-like configuration long in the left and right direction is provided with a supporting member 31 for a hinge shaft unit 3 such that the supporting member 3 is movable in the left and right direction. The supporting member 31 is provided with a hinge shaft 32 such that said hinge shaft 32 is turnable about the axis extending in the back and forth direction of the hinge shaft 32. The hinge shaft unit 3 is biased rightward by coiled springs 5A, 5B, 5C through a first movable member 4A and biased leftward by coiled springs 6A, 6B, 6C through a second movable member 4B.

## Description

### Technical Field

This invention relates to a hinge apparatus designed for widening the range of use so that it can be used for various purposes.

### Background Art

In general, the hinge apparatus comprises a hinge main body and a hinge shaft turnably supported by this hinge main body. The hinge main body is fixed to one of two articles which are to be turnably connected, and the hinge shaft is fixed to the other article. Owing to this arrangement, the two articles are turnably connected to each other through the hinge apparatus.

In the conventional hinge apparatus as, for example, in a hinge apparatus disclosed in Japanese Patent Application Laid-Open No. H09-195611, the hinge shaft is positionally fixed to the hinge main body. Accordingly, although the conventional hinge apparatus can be used in case two articles are merely turnably connected to each other, it cannot be used in case two articles move in a direction orthogonal to the rotation axis while turning. So, there is such a problem that the range of use is small by that portion.

### Disclosure of the Invention

According to the present invention, there is provided, in order to achieve the above objects, a hinge apparatus comprising a hinge main body, a hinge shaft supported by the hinge main body such that the hinge shaft is tunable and movable in a direction orthogonal to a rotation axis of the hinge shaft, and first and second biasing means for respectively biasing the hinge shaft in one and the other directions in the moving direction of the hinge shaft.

The above hinge apparatus preferably further comprises a supporting member disposed at the hinge main body such that the supporting member is movable in the moving direction of the hinge shaft, the hinge shaft being turnably supported by the supporting member, the hinge shaft being biased by the first and second biasing means through the supporting member.

The above hinge apparatus preferably further comprises a first and a second movable member supported by the hinge main body such that the first and second movable members are movable in the moving direction of the hinge shaft and arranged on opposite sides in the moving direction of the hinge shaft, the hinge shaft being biased by the first and second biasing means through the first and second movable members and the supporting member.

The above hinge apparatus preferably further comprises a first and a second movable member supported on the hinge main body such that the first and second movable members are movable in the moving direction of the hinge shaft and arranged on opposite sides of the supporting member in the moving direction of the hinge shaft, the hinge shaft being biased by the first and second biasing means through the first and second movable members and the supporting member.

It is preferable that the hinge main body is provided with a first stopper for prohibiting the first movable member from moving toward the second movable member side together with the supporting member when the supporting member moves toward the second member side beyond a predetermined neutral position, and a second stopper for prohibiting the second movable member from moving towards the first movable member side together with the supporting member when the supporting member moves toward the first movable member side beyond the neutral position.

It is preferable that the hinge main body is provided with a first and a second sliding surface extending in mutual parallel relation in the moving direction of the hinge shaft and slidingly contacted with one and the other side parts of the supporting member, respectively, the first and second sliding surfaces being provided with a first and a second guide protrusion extending, respectively, in the moving direction of the hinge shaft, and one and the other side parts of the supporting member, which are in slide contact with the first and second sliding surfaces, being provided with a first and a second guide recess for allowing the first and second protrusions to be fixed therein, respectively, such that the first and second guide protrusions are slidable in the moving direction of the hinge shaft but non-movable in the direction of the rotation axis of the hinge shaft.

It is preferable that the first movable member is provided at the end part on the supporting member side with a first engagement recess for allowing the end part on the first movable member side of at least one of the first and second guide protrusions and a first engagement protrusion disposed at the supporting member to fit therein such that they are slidable in the moving direction of the hinge shaft but non-movable in the direction of the axis of the hinge shaft, when the hinge shaft is located in the neutral position, and the end part on the supporting member side of the second movable member is provided with a second engagement recess for allowing the end part on the second movable member side of at least one of the first and second guide protrusions and a second engagement protrusion disposed at the supporting member to fit therein such at they are slidable in the moving direction of the hinge shaft but non-movable in the direction of the axis of the hinge shaft, when the hinge shaft is located in the neutral position.

It is preferable that the end face on the first movable member side of the first guide protrusion fitted to the first engagement recess is collided with a bottom surface of the first engagement recess, thereby serving as a first stopper for prohibiting the first movable member from moving toward the second movable member side, and the end face on the second movable member side of the second guide protrusion fitted to the second engagement recess is collided with a bottom surface of the second engagement recess, thereby serving as a second stopper for prohibiting the second movable member from moving toward the first movable member side.

### Brief Description of Drawings

FIG. 1 is a front view showing a first embodiment of a hinge apparatus of this invention.
FIG. 2 is a right side view of the above embodiment.
FIG. 3 is a bottom view of the above embodiment.
FIG. 4 is a sectional view taken along line X-X of FIG. 2.
FIG. 5 is a sectional view taken along line X-X of FIG. 1.
FIG. 6 is a sectional view taken along line Y-Y of FIG. 1.
FIG. 7 is a perspective view of the above embodiment.
FIG. 8 is an exploded perspective view of the above embodiment.
FIG. 9 is an exploded perspective view of a hinge shaft unit used in the above embodiment.
FIG. 10 is a perspective view showing one example of a cellular telephone set in which the hinge apparatus shown in FIGS. 1 through 9 is used.
FIG. 11 is an exploded perspective view of the above cellular telephone set,
FIG. 12 is a partly see-through side view showing one state of the above cellular telephone set in which a reception section is located in the fully open position.
FIG. 13 is a partly see-through side view showing another state of the above cellular telephone set in which the reception section is turned toward the fully closed position from the fully open position until it reaches an end part in a first angle range.
FIG. 14 is a partly see-through side view showing a further state of the above cellular telephone set in which the reception section is turned to the open position.
FIG. 15 is a partly see-through side view showing a still further state of the above cellular telephone set in which the reception section is turned to the vertical position.
FIG. 16 is a partly see-through side view showing a yet further state of the above cellular telephone set in which the reception section is turned to an end part in a third angle range on the fully open position side.
FIG. 17 is a partly see-through side view showing an additional state of the above cellular telephone set in which the reception section is turned to an end part in a third angle range on the fully closed position side (end part in a fourth angle range on the fully open position side).
FIG. 18 is a partly see-through view showing a further additional state of the above cellular telephone set in which the reception section is turned to the fully closed position.
FIG. 19 is a perspective view showing one example of a digital camera in which the hinge apparatus shown in FIGS. 1 through 9 is used.
FIG. 20 is an exploded perspective view of the above digital camera.

### Best Mode for Carrying Out the Invention

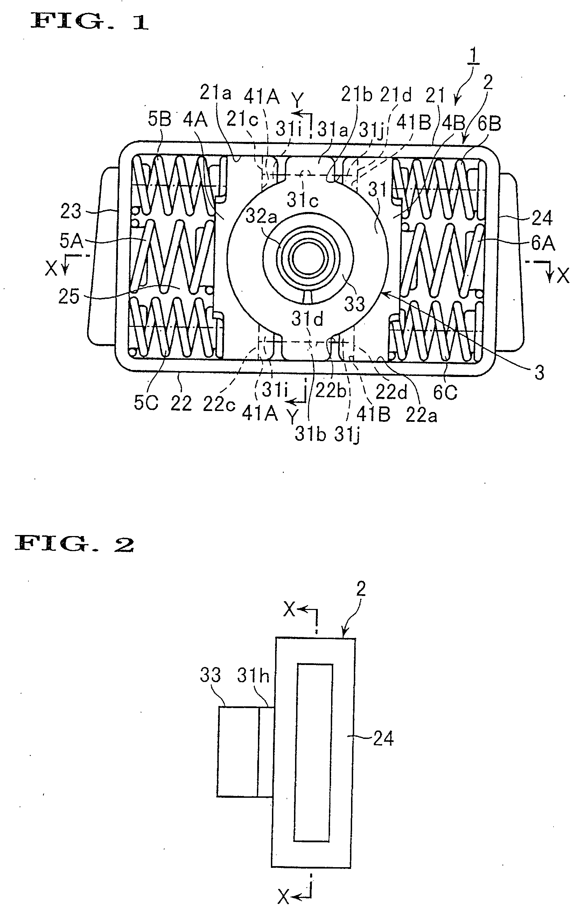

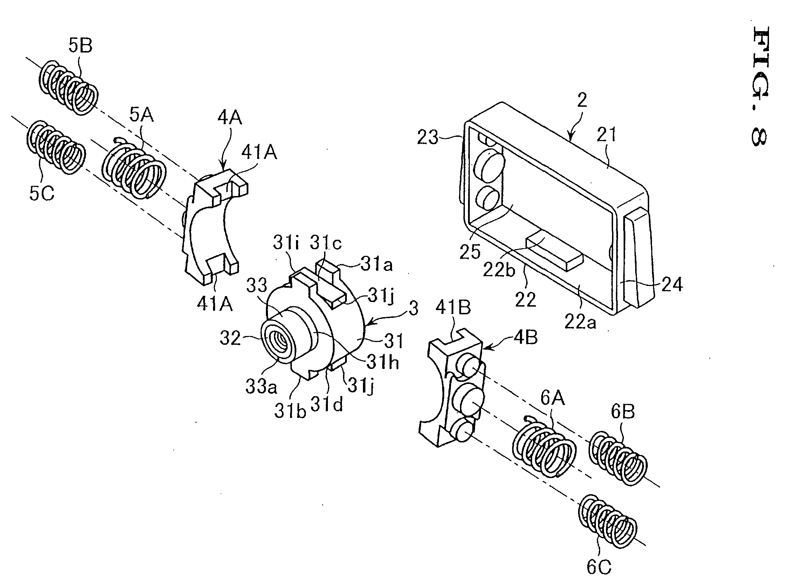

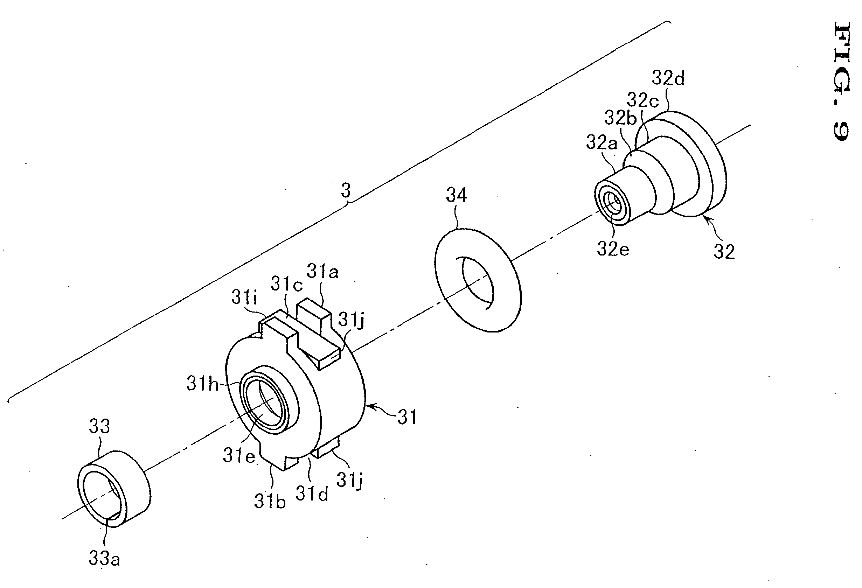

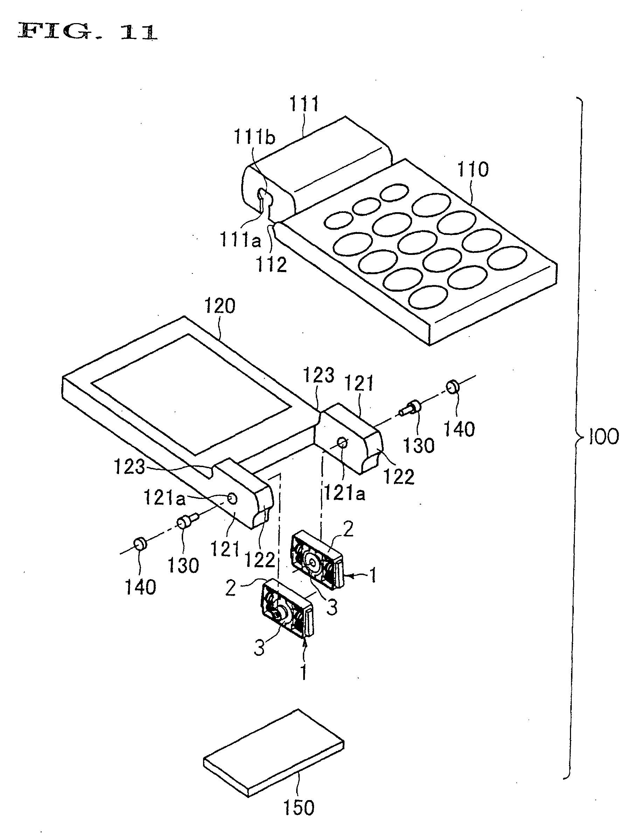

One embodiment of the present invention will be described hereinafter with reference to FIGS. 1 through 20.

FIGS. 1 through 9 show one embodiment of a hinge apparatus according to the present invention. As shown in FIGS. 1, 4 and 8, a hinge apparatus 1 of this embodiment includes a hinge main body 2, a hinge shaft unit 3 and a pair of first and second movable members 4A, 4B.

The hinge main body 2 has a rectangular frame-like configuration with its longitudinal direction directing in the left and right direction (hereinafter, the terms "up", "down", "left" and "right" refer to up, down, left and right in FIG. 1) in FIG. 1. The hinge main body 2 includes an upper wall part 21, a lower wall part 22 and left and right wall parts 23, 24. A receiving part 25 which is open at its front and rear faces is defined by those wall parts 21 through 24. The inner surfaces of the upper and lower wall parts 21, 22 facing this receiving part 25 serve as first and second flat sliding surfaces 21a, 22a extending in mutually parallel relation in the left and right direction. The sliding surfaces 21a, 22a are formed with first and second guide protrusions 21b, 22b extending in the left and right direction, respectively. The guide protrusions 21b, 22b are smaller in length in the left and right direction and in width in the back and forth direction than the sliding surfaces 21a, 22a, respectively and arranged in the central parts of the sliding surfaces 21a, 22a in the left and right direction and in the back and forth direction.

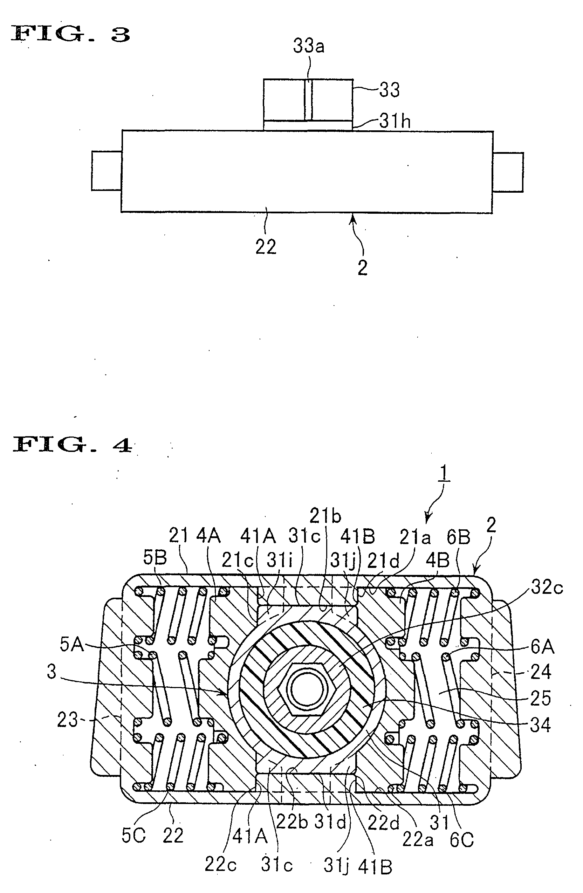

The hinge shaft unit 3, as shown in FIGS. 4 through 6 and 9, includes a supporting member 31. The supporting member 31 has a circular cylindrical configuration and is formed at upper and lower side parts on its outer peripheral surface with protrusions 31a, 31b. The distal end faces of the protrusions 31a, 31b are slidingly contacted with the sliding surfaces 21a, 22a, respectively, thereby the supporting member 31 is slideably supported in the longitudinal direction (left and right direction) of the sliding surfaces 21a, 22a, respectively. The protrusions 31a, 31b are formed at their central parts with first and second guide recesses 31c, 31d extending in the longitudinal direction of the sliding surfaces 21a, 22a, respectively. The first and second guide protrusions 21b, 22b are fitted in the guide recesses 31c, 31d such that the first and second guide protrusions 21b, 22d are relatively slideable in the left and right direction but non-movable in the back and forth direction. Owing to this arrangement, the supporting member 31 is supported by the hinge main body 2 such that the supporting member 31 is movable only in the left and right direction but non-movable in the back and forth direction. Of course, because the protrusions 31a, 31b are in contact with the sliding surfaces 21a, 22a, the supporting member 31 is non-movable in the up and down direction.

At the inside of the supporting member 31, a reduced-diameter hole part 31e is formed on the front surface side, an enlarged-diameter hole part 31f is formed on the rear surface side and a tapered hole part 31g is formed between the reduced-diameter hole part 31e and the enlarged-diameter hole part 31f. The axes of those hole parts 31e through 31g are not only mutually aligned but also aligned with the axis on the outer peripheral surface of the supporting member 31, and extend in the back and forth direction. An annular protrusion 31h surrounding the reduced-diameter hole part 31e is formed on the front surface part of the supporting member 31.

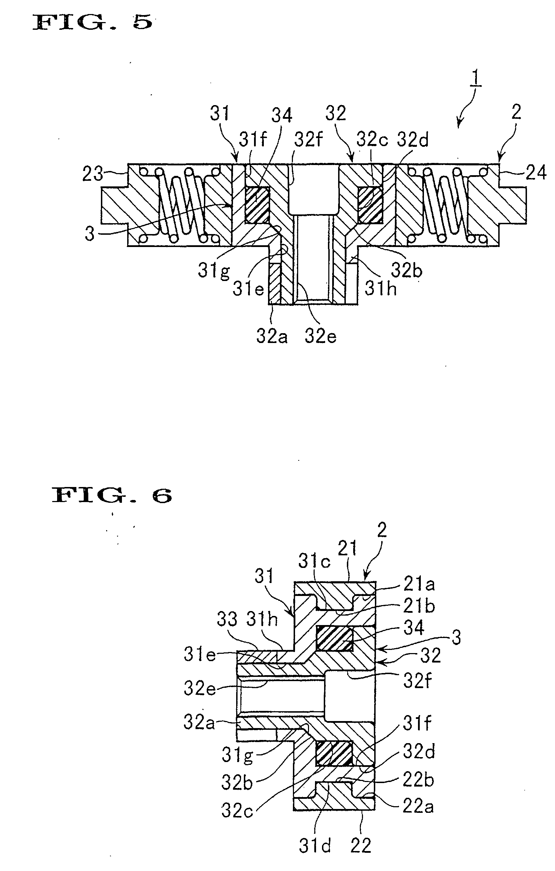

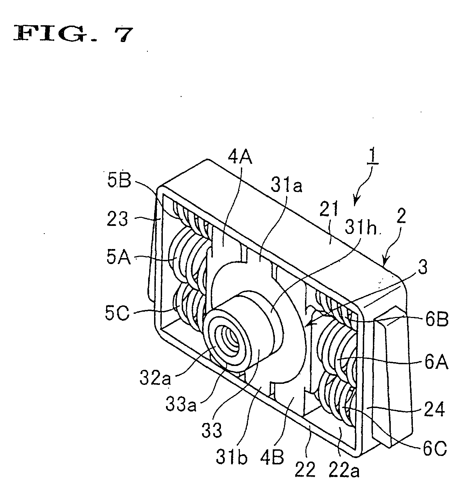

As shown in FIGS. 5 and 6, a hinge shaft 32 is inserted into the inside of the supporting member 31. The hinge shaft 32 includes a reduced-diameter part 32a, a tapered part 32b, an intermediate diameter hole 32c and an enlarged-diameter part 32d. The reduced-diameter part 32a, the tapered part 32b and the enlarged-diameter part 32d are turnably fitted to the reduced-diameter hole part 31e, the tapered hole part 31g and the enlarged-diameter hole part 31f of the supporting member 31, respectively. Owing to this arrangement, the hinge shaft 32 is turnably supported by the supporting member 31. Accordingly, the hinge shaft 32 is supported by the hinge main body 2 through the supporting member 31 such that the hinge shaft 32 is movable in the left and right direction and turnable about the axis extending in the back and forth direction.

The distal end part of the reduced-diameter part 32a of the hinge shaft 32 projects forward from the reduced-diameter hole part 31e and a stopper ring 33 is fixedly fitted thereto. The inside diameter of this stopper ring 33 is smaller than the outside diameter of the reduced-diameter part 32a. However, since the stopper ring 33 is formed with a slit 33a extending across one side part in the axial direction of the stopper ring 33, the stopper ring 33 can be enlarged or reduced in diameter. The stopper ring 33 in its enlarged-diameter state is fitted to the reduced-diameter part 32a, and fixed to the reduced-diameter part 32a by its own elastic force for reducing its diameter. The stopper ring 33 fixedly fitted to the reduced-diameter part 32a is collided with the annular protrusion 31h and the outer peripheral surface of the tapered part 32b is collided with the inner peripheral surface of the tapered hole part 31g. By doing so, the hinge shaft 32 is supported by the supporting member 31 such that the hinge shaft 32 is non-movable in the axial direction (back and forth direction).

A braking member 34 composed of an elastic member such as rubber is mounted on the intermediate diameter part 32c of the hinge shaft 32. The inner and outer peripheral surfaces of this braking member 34 are press contacted with the outer peripheral surface of the intermediate diameter part 32c and the inner peripheral surface of the enlarged-diameter part 31f, respectively. Accordingly, a frictional resistance for prohibiting the hinge shaft 32 from turning occurs due to contact between both the hinge shaft 32 and supporting member 31 and the braking member 34. By this frictional resistance, the free turning of the hinge shaft 32 is restricted with respect to the supporting member 31. Of course, it is possible to cause the hinge shaft 32 to turn by acting a larger turning force than the frictional resistance on the hinge shaft 32. In case the hinge shaft 32 is made to rotate freely with respect to the supporting member 31, the braking member 34 is not necessary.

At the inside of the hinge shaft 32, a screw hole 32e is formed on the front surface side and a spanner engagement hole 32f having a hexagonal configuration in section is formed at the rear surface side. Those holes 32e, 32f are arranged with their axes aligned with the axis of the hinge shaft 32. The screw hole 32e is used for fixing the hinge shaft 32 to an article by inserting, for example, a bolt therein and tightening. On the other hand, the spanner engagement hole 32e is used to prevent the hinge shaft 32 from turning by non-turnably inserting the spanner into the hole 32e when a bolt is screwed into the screw hole 32e and tightened.

As shown in FIGS. 1, 4, 7 and 8, at the inside of the receiving part 25, the first and second movable member 4A, 4B are disposed at the opposite left and right sides of the hinge shaft unit 3 such that the first and second movable members 4A, 4B are movable in the left and right direction. The first movable member 4A is biased rightward (toward the second movable member 4B side from the first movable member 4A side) by coiled springs (first biasing means) 5A, 5B, 5C disposed between the first movable member 4A and the left side wall part 23 of the hinge main body 2 and collided with the left side surface of the supporting member 31 of the hinge shaft unit 3. On the other hand, the second movable member 4B is biased leftward (toward the first movable member 4A side from the second movable member 4B side) by coiled springs (second biasing means) 6A, 6B, 6C disposed between the second movable member 4B and the right side wall part 24 of the hinge main body 2 and collided with the right side surface of the supporting member 31 of the hinge shaft unit 3. Accordingly, the hinge shaft unit 3 is biased rightward by the coiled springs 5A, 5B, 5C through the first movable member 4A and biased leftward by the coiled springs 6A, 6B, 6C through the second movable member 4B. It should be noted, however, that when the hinge shaft unit 3 (the supporting member 31 and the hinge shaft 32) is located at the left side from the center (hereinafter, referred to as the "neutral position") in the left and right direction of the hinge main body 2, the hinge shaft unit 3 is biased only rightward by the coiled springs 5A through 5C but not biased leftward by the coiled springs 6A through 6C, as described hereinafter. In contrast, when the hinge shaft 32 is located at the right side from the neutral position, the hinge shaft unit 3 is biased only leftward by the coiled springs 6A through 6C but not biased rightward by the coiled springs 5A through 5C.

Instead of the coiled springs 5A through 5C, one or two or four or more of coiled springs may be used. Instead of the coiled springs, other biasing means may also be used.

First engagement recesses 41A, 41A extending in a direction orthogonal to the two directions of the moving direction and the axial direction of the hinge shaft 32, that is, extending in the vertical direction are formed at the upper and lower end parts of the right side surface opposing the supporting member 31 of the first movable member 4A. First engagement protrusions 31i, 31i formed on the upper and lower end parts on the left side part opposing the first movable member 4A of the supporting member 31 are fitted, respectively, to the end parts on the mutually proximal side of the first engagement recesses 41A, 41A such that the first engagement protrusions 31i, 31i is movable in the moving direction (left and right direction) of the hinge shaft 32 but non-movable in the axial direction (back and forth direction) of the hinge shaft 32. The left end parts of the first and second guide protrusions 21b, 22b are fitted, respectively, to the end parts on the mutually separated side of the first and second guide protrusions 21b, 22b such that the first and second guide protrusions 21b, 22b are movable in the moving direction of the hinge shaft 32 but non-movable in the axial direction of the hinge shaft 32. It should be noted, however, that the left end parts of the first and second guide protrusions 21b, 22b are fitted to the first engagement recesses 41A, 41A only when the hinge shaft 32 is located at the right side from the central position and located at a position in a predetermined range from the neutral position to the left side. When the hinge shaft 32 is moved leftward beyond the predetermined range, the left end parts of the first and second guide protrusions 21b, 22b are brought out of the first engagement recesses 41A, 41A. Of course, when the hinge shaft 32 is returned to the predetermined range from there, the left end parts of the first and second guide protrusions 21b, 22b are again fitted to the first engagement recesses 41A, 41A. When the hinge shaft 32 is located at the neutral position, the left end faces (first stopper portion) 21c, 22c of the first and second guide protrusions 21b, 22b are collided with the bottom surfaces of the first engagement recesses 41A, 41A, respectively. Accordingly, the first movable member 4A becomes unable to move rightward any further.

The second movable member 4B is symmetrically constituted with the first movable member 4A in the left and right direction. That is, the second engagement recesses 41B, 41B are formed at the upper end lower end parts of the left side surface opposing the supporting member 31 of the second movable member 4B. The second engagement protrusions 31j, 31j formed on the upper and lower end parts on the right side part opposing the second movable member 4B of the supporting member 31 are fitted to the end parts on the mutually proximal sides of the second engagement recesses 41B, 41B such that the second engagement protrusions 31j, 31j are movable in the moving direction of the hinge shaft 32 but non-movable in the axial direction of the hinge shaft 32, while the right end parts of the first and second guide protrusions 21b, 22b are fitted to the end parts on the mutually separated side of the second engagement recesses 41B, 41B such that the first and second guide protrusions 21b, 22b are movable in the moving direction of the hinge shaft 32 but non-movable in the axial direction of the hinge shaft 32. It should be noted, however, that the right end parts of the first and second guide protrusions 21b, 22b are fitted to the second engagement recesses 41B, 41B only when the hinge shaft 32 is located at the left side from the central position and located at a position in a predetermined range from the neutral position to the right side. When the hinge shaft 32 is moved rightward beyond the predetermined range, the right end parts of the first and second guide protrusions 21b, 22b are brought out of the second engagement recesses 41B, 41B. Of course, when the hinge shaft 32 is returned to the predetermined range from there, the right end parts of the first and second guide protrusions 21b, 22b are again fitted to the second engagement recesses 41B, 41B. When the hinge shaft 32 is located at the neutral position, the right end faces (second stopper portion) 21d, 22d of the first and second guide protrusions 21b, 22b are collided with the bottom surfaces of the second engagement recesses 41B, 41B, respectively. Accordingly, the second movable member 4B becomes unable to move leftward any further.

Presume that the hinge shaft 32 is located at the neutral position in the hinge apparatus 1 which is constructed in the manner as mentioned above. In that state, the hinge shaft unit 3 is biased rightward by the coiled springs 5A through 5C and also biased leftward by the coiled springs 6A through 6C. Owing to the balancing of the two biasing forces, the hinge shaft unit 3 is held in the neutral position. It is also accepted that when the hinge shaft 32 is located at the neutral position, the first and second movable members 4A, 4B are collided with the first and second guides 21b, 22b, thereby the first and second movable members 4A, 4B are slightly spaced away from the supporting member 31, so that the biasing forces of the coiled springs 5A through 5C and 6A through 6C will not act on the hinge shaft unit 3.

When the hinge shaft unit 3 is moved leftward from the neutral position, the hinge shaft unit 3 is moved against the biasing forces of the coiled springs 5A through 5C which act on the hinge shaft unit 3 through the first movable member 4A. At that time, since the second movable member 4B is prohibited from moving leftward by the right end faces 21d, 22d of the first and second guide protrusions 21b, 22b, the biasing forces of the coiled springs 6A through 6C do not act on the hinge shaft unit 3. Accordingly, when the hinge shaft 32 is moved leftward from the neutral position, the biasing force acting on the hinge shaft unit 3 can be determined only by the biasing forces of the coiled springs 5A through 5C irrespective of the biasing forces of the coiled springs 6A through 6C. In contrast, when the hinge shaft 32 is moved rightward from the neutral position, only the biasing forces of the coiled springs 6A through 6C act on the hinge shaft unit 3 and the biasing forces of the coiled springs 5A through 5C do not act on the hinge shaft unit 3. Accordingly, when the hinge shaft 32 is moved rightward from the neutral position, the biasing force acting on the hinge shaft unit 3 can be determined only by the biasing forces of the coiled springs 6A through 6C irrespective of the biasing forces of the coiled springs 5A through 5C. Thus, the biasing force acting on the hinge shaft unit 3 can easily be determined to a desired size. Moreover, the biasing force acting on the hinge shaft unit 3 when the hinge shaft 32 is moved leftward from the neutral position can be established independently from the biasing force acting on the hinge shaft unit 3 when the hinge shaft 32 is moved rightward from the neutral position.

When the hinge shaft unit 3 is moved leftward beyond the predetermined range from the neutral position, the left end parts of the first and second guide protrusions 21b, 22b are brought out of the first engagement recesses 41A, 41A of the first movable member 4A. However, since the first engagement protrusions 31i, 31i of the supporting member 31 are fitted to the first engagement recesses 41A, 41A, the first movable member 4A is not moved in the back and forth direction but it is moved only in the left and right direction together with the hinge shaft unit 3. When the hinge unit 3, which has moved beyond the predetermined range, is again moved into the predetermined range on the left side from the neutral position, the left end parts of the first and second guide protrusions 21b, 22b are fitted to the first engagement recessed 41A, 41A. Likewise, when the hinge shaft unit 3 is moved rightward beyond the predetermined range from the neutral position, the right end parts of the first and second guide protrusions 21b, 22b are brought out of the second engagement recesses 41B, 41B of the second movable member 4B. However, since the second engagement protrusions 31j, 31j of the second supporting member 31 are fitted to the second engagement recesses 41B, 41B, the second movable member 4B is not moved in the back and forth direction but it is moved only in the left and right direction together with the hinge shaft unit 3. When the hinge shaft 32, which has moved beyond the predetermined range, is again moved into the predetermined range on the right side from the neutral position, the right end parts of the first and second guide protrusions 21b, 22b are again fitted to the second engagement recesses 41B, 41B.

In case two articles are to be turnably connected to each other through the hinge apparatus 1 which is constructed in the manner as mentioned above, the hinge main body is fixed to one of the articles and the hinge shaft 32 is fixed to the other article. By doing so, two articles can be turnably connected to each other through the hinge apparatus 1. Moreover, since the hinge shaft 32 is movable in the direction orthogonal to the rotation axis of the hinge shaft 32 with respect to the hinge main body 2, the two articles can be moved in the direction orthogonal to the rotation axis while being turned.

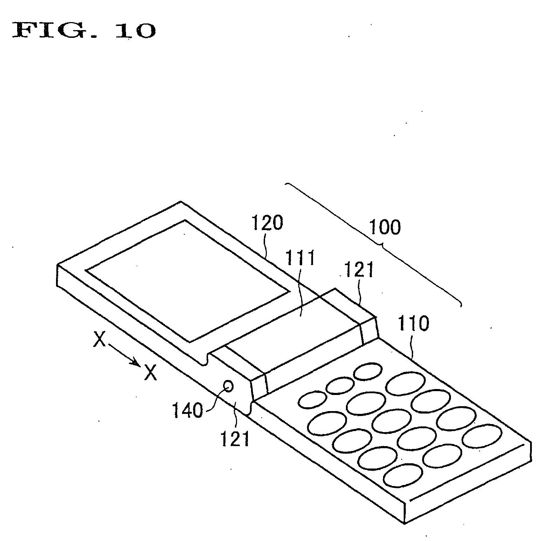

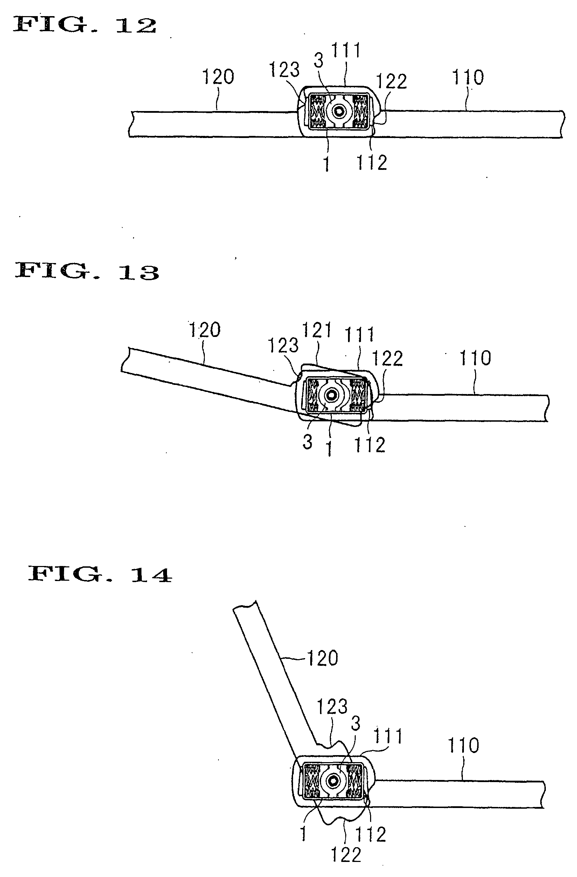

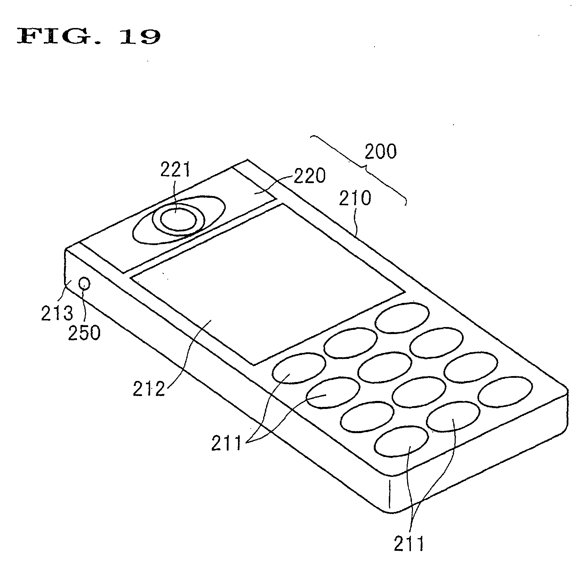

FIGS. 10 through 18 show a cellular telephone set 100 in which the hinge apparatus 1 which is constructed in the manner as mentioned above is used. This cellular telephone set 100 includes a transmission section 110 and a reception section 120. A hinge receiving part 111 with an open lower end part is formed at the end part on the reception section 120 side of the transmission section 110. The hinge apparatuses 1 are inserted into the opposite end parts of the hinge receiving part 111 through the lower open end and the hinge main bodies 2 are fixed to the opposite end parts of the hinge receiving part. At the opposite end wall parts of the hinge receiving part 111, a cutout part 111a for allowing the annular protrusion 31h and the stopper ring 33 of the hinge apparatus 1 to thrust therein when the hinge apparatus 1 is inserted into the hinge receiving part 111 through the lower opening part is formed, and a slot 111b extending in the left and right direction is formed at the upper end part of the cutout part 111a. This slot 111 is adapted to allow the annular protrusion 31 and the stopper ring 33 to move therein in the left and right direction. On the other hand, connecting arm parts 121, 121 are formed at the opposite side parts of the end part on the transmission section 110 side of the reception section 120, and the hinge receiving part 111 is inserted between the connecting arm parts 121, 121. A bolt insertion hole 121a is formed at each connecting arm part 121. By inserting the bolt 130 through the bolt insertion hole 121a and threadingly engaging it with the screw hole 32e of the hinge shaft 32 so as to be tightened, the hinge shaft 32 is fixedly connected to the connecting arm part 121. Owing to this arrangement, the reception section 120 is connected to the transmission section 110 through the hinge apparatus 1 such that the reception section is turnable between the fully open position shown in FIG. 12 and the fully closed position shown in FIG. 18 and movable in the X-X direction (longitudinal direction of the slot 111b) shown in FIG. 10 orthogonal to the rotation axis. Reference numeral 140 denotes a cosmetic lid fixedly fitted to the bolt insertion hole 121a so that the bolt 130 cannot be visually recognized from the outside, and reference 150 denotes a cosmetic plate for shielding the lower end opening part of the hinge receiving part 111.

Cam parts 112, 112 are formed on the end part on the reception section 120 side of the transmission section 110. The cam parts 112, 112 are arranged to be in opposing relation to the distal end parts of the connecting arm parts 121, 121. On the other hand, a cam part 122 is formed at the distal end part of the connecting arm part 121 opposing the cam part 112. A cam part 123 is formed at a rear end part of the connecting arm part 121. The cam part 112 of the transmission section 110, the cam parts 122, 123 of the reception section 120 and the hinge apparatus 1 are co-acted to make the reception section 120 turn with respect to the transmission section 110 as shown in FIGS. 12 through 18.

That is, as shown in FIG. 12, at the time of fully open where the angle formed between the transmission section 110 and the reception section 120 is 180 degrees, the cam parts 112, 122 are engaged with each other in a stable manner and the hinge shaft unit 3 is located at the neutral position. Accordingly, the reception section 120 is held in the fully open position. Within a first angle range (for example, within a range of 15 degrees from the fully open position) where the reception section 120 is turned toward the fully closed position (see FIG. 18) side from the fully open position, in accordance with the turning motion of the reception section 120 from the fully open position toward the fully closed position side, the cam parts 112, 122 cause the hinge shaft unit 3 to move leftward in FIG. 13 to compress the coiled springs 5A through 5G. Accordingly, when the reception section 120 is brought into a state where it can turn freely at the time the reception section 120 is located within the first angle range, the reception section 120 is returned to the fully closed position.

It is preferable that stop means for prohibiting the reception section 120 from turning in the direction toward the fully open position side from the fully closed position side beyond the fully open position is disposed between the transmission section 110 and the reception section 120 and the reception section 120 is slightly turn-biased in the direction toward the fully open position side from the fully closed position side even when the reception section 120 is located at the fully open position. By doing so, the reception section 120 can be prevented from rattling in the fully open position.

FIG. 13 shows one state in which the reception section 120 is located on a border line between the first angle range and the second angle range (for example, within a range of 15 degrees to 45 degrees from the fully closed position). When the reception section 120 is turned toward the fully closed position side from that state and brought into the second angle range, the coiled springs 5A through 5C are held in a constant compressed state under the effect of the cam parts 112, 122. Accordingly, within the second angle range, no turn biasing force acts on the reception section 120. Thus, the reception section 120 can be stopped at any desired position by the frictional resistance acting between the cam parts 112, 122.

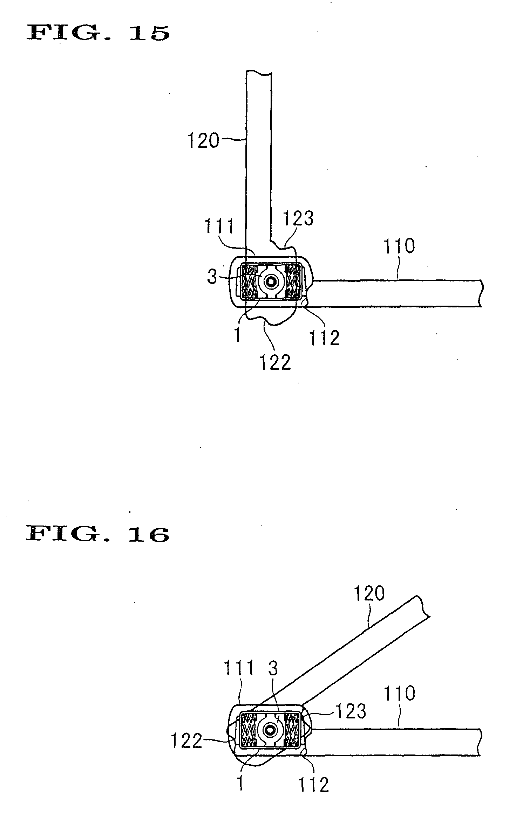

When the reception section 120 is turned towards the fully open position side beyond the second angle range, the reception section 120 is turned into the open position shown in FIG. 14 (for example, a position 60 degrees away from the fully open position toward the fully closed position side) by the biasing forces of the coiled springs 5A through 5C. In this open position, the hinge shaft 32 of the hinge shaft unit 3 is returned to the neutral position. Accordingly, in the open position, no turn biasing force acts on the reception section 120. At the time of turning the reception section 120 from the open position toward the fully open position side, the reception section 120 is turned against the biasing forces of the coiled springs 5A through 5C. In contrast, when the reception section 120 is turned from the open position toward the fully open position side, the cam parts 112, 122 are brought away from each other. Accordingly, during the time the reception section 120 reaches the third angle range (for example, a range of 15 degrees to 30 degrees from the fully closed position toward the fully open position side) from the open position via the vertical position shown in FIG. 15, the reception section 120 is turned against the frictional resistance caused by the braking member 34 and the reception section 120 can be stopped at any desired position by the frictional resistance caused by the braking member 34.

When the reception section 120 reaches the third angle range, the cam part 123 comes into contact with the cam part 112. Then, during the time the reception section 120 reaches the end part of the fully closed position side from the end part of the fully open position side within the third angle range, as the reception 120 is turned, the hinge shaft unit 3 is moved leftward under the effect of the cam parts 112, 120. As a consequence, the coiled springs 5A through 5C are compressed. Accordingly, within the third angle range, the reception section 120 is turned toward the fully closed position side against the biasing forces of the coiled springs 5A through 5C. In contrast, when the reception section 120 is made in a freely turnable state within the third angle range, the reception section 120 is returned to the end part on the fully open position side within the third angle range under the effects of the coiled springs 5A through 5C and the cam parts 112, 123.

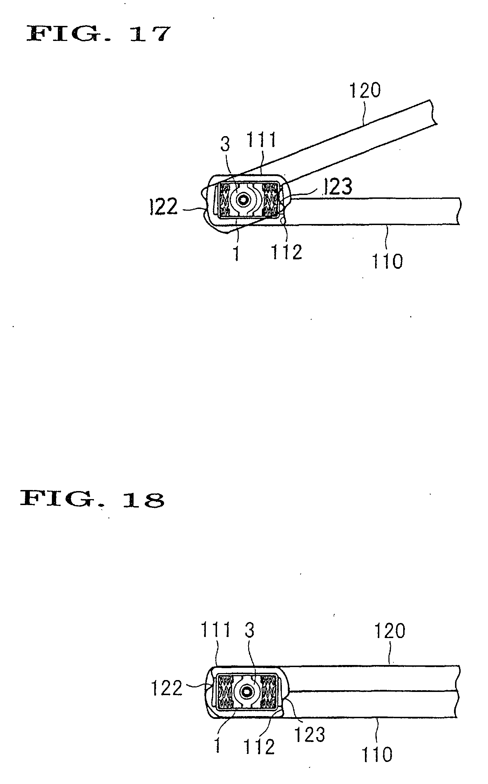

FIG. 17 shows a state in which the reception section 120 reaches the end part on the fully closed position side within the third angle range. The end part on the fully closed position side within the third angle range is coincident with the end part on the fully open position side within the fourth angle range (for example, a range 15 degrees away from the fully closed position toward the fully open position side). In this position, the coiled springs 5A through 5C are compressed the most. When the reception section 120 is brought into the fourth angle range, the reception section 120 is turned toward the fully closed position side shown in FIG. 18 under the effects of the coiled springs 5A through 5C and the cam parts 112, 123. Of course, when the reception section 120 is turned from the fully closed position side toward the fully open position side, it is turned against the biasing forces of the coiled springs 5A through 5C. When the reception section 120 is turned into the fully open position where the front surface of the reception section 120 is collided with the front surface of the transmission section 110, the cam parts 112, 123 are engaged with each other in a stable manner and the hinge shaft unit 3 is returned to the neutral position. Accordingly, the reception section 120 is stably held in the fully closed position. Of course, it is accepted that also in the fully closed position, the reception section 120 is slightly turn biased from the fully open position side toward the fully closed position side in order to prevent the reception section 120 from rattling.

In case the reception section 120 is turned from the fully closed position to the fully open position, the cam parts 112, 122, 123 and the hinge apparatus 1 are merely operated in the reverse way to the way just mentioned above and so, description thereof is omitted.

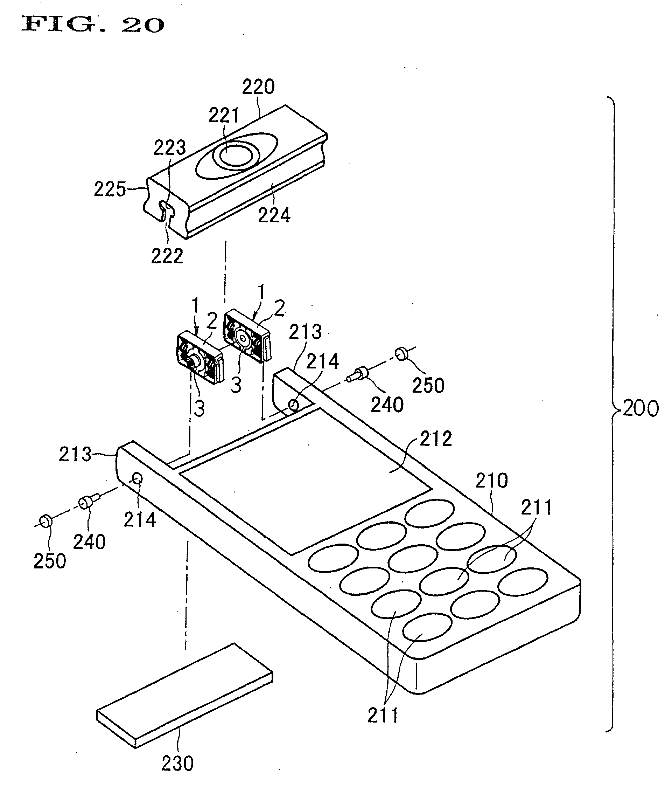

FIGS. 19 and 20 show a digital camera 200 in which the hinge apparatus 1 is used. This digital camera 200 includes a main body part 210 and an image pickup part 220.

The main body part 210 is provided at a front surface part thereof with various control buttons 211 and a liquid crystal display part 212. A pair of supporting pieces 213, 213 opposing to each other in the left and right direction are formed at the opposite sides in the left and right direction of the end part on the image pickup part 220 side of the main body part 210. Each supporting piece 213 is formed with a bolt insertion hole 214 extending in the left and right direction through the central part of each supporting piece 213.

On the other hand, the image pickup part 220 has a generally same length as the interval between the pair of supporting pieces 213, 213 and is turnably inserted between the pair of supporting pieces 213, 213. The image pickup part 220 is provided at a front surface part thereof with an exposure part 221. The hinge apparatuses 1, 1 are inserted into the opposite end parts in the left and right direction of the image pickup part 220 through the lower opening part, and the hinge main body 2 of the respective hinge apparatuses 1, 1 is fixed thereto. After the hinge apparatuses 1, 1 are fixed, the lower opening part of the image pickup part 220 is shielded with a lid member 230. At the opposite left and right end parts of the image pickup part 220, cutout parts 222 for allowing the annular protrusion 31h and the stopper ring 33 to thrust therein when the hinge apparatus 1 is inserted into the image pickup part 220 through the opening part are formed, and a slot 223 extending in the left and right direction from the upper end parts of the cutout parts 222 is formed. The annular protrusion 31h and the stopper ring 33 passing through the cutout part 22 are inserted in this slot 223 such that the protrusion 31h and the stopper ring 33 are movable in the left and right direction.

The image pickup part 220 is inserted between the pair of supporting pieces 213, 213 such that the axis of the screw hole 32e of the hinge shaft 32 is aligned with the axis of the bolt insertion hole 214. Then, the bolt 240 inserted into the bolt insertion hole 214 is threadingly engaged with the screw hole 32e and tightened. By doing so, the hinge shaft 32 is fixed to the supporting piece 213. Owing to this arrangement, the image pickup part 220 is connected to the main body part 210 through the hinge apparatuses 1, 1 such that the image pickup part 220 is turnable and movable in the longitudinal direction of the slot 223. Reference numeral 250 denotes a cosmetic plate which is fixedly fitted to the holt insertion hole 214 after the bolt 240 is inserted.

The image pickup part 220 is turnable between a first image pickup position shown in FIG. 19 where the exposure part 221 is directed to the front surface side of the main body part 210, and a second image pickup position where the exposure part 221 is 180 degrees turned from the first image pickup position and is directed to the rear surface side of the main body part 210. The image pickup part 220 is held in the first and second image pickup positions in a stable manner.

That is, a main body side cam part (not shown) is formed at the end face of the main body part 210 located between the pair of supporting pieces 213, 213. On the other hand, a first cam part 224 is formed at the side surface opposing the end face of the main body part 210 in the first image pickup position of the image pickup part 220, and a second cam part 225 is formed at the side surface directing to the opposite side by 180 degrees to the side surface where the first cam part 224 is formed.

When the image pickup part 220 is located at the first image pickup position, the main body side cam part and the first cam part 224 are engaged with each other in a stable manner, and the hinge shaft 32 of the hinge apparatus 1 is located at the neutral position. Accordingly, the image pickup part 220 is held in the first image pickup position in a stable manner. During the time the image pickup part 220 is turned by a predetermined first angle range (for example, within a range 15 degrees from the first image pickup position) from the first image pickup position of the image pickup part 220 toward the second image pickup position side, the main body side cam part and the first cam part 224 cause the hinge shaft unit 3 to move leftward of FIG. 1 as the image pickup part 220 is turned, and the coiled springs 5A through 5C are compressed. Accordingly, within the first angle range, when the image pickup part 220 can be made freely rotatable, the image pickup part 220 is returned to the first image pickup part 220 by the coiled springs 5A through 5C, the main body side cam part, and the first cam part 224.

When the image pickup part 220 departed from the first angle range is brought into the predetermined second angle range (for example, within the range of 15 degrees to 30 degrees from the first angle range toward the second image pickup position side), the image pickup part 220 is turned to the end part of the second angle range toward the second image pickup position side by the coiled springs 5A through 5C, the main body cam part and the first cam part 224. When the image pickup part 220 reaches the eng part on the second image pickup position side, the hinge shaft unit 3 of the hinge apparatus 1 is returned to the neutral position. Accordingly, no turn biasing force acts on the image pickup part 220. Of course, when the image pickup part 220 is turned toward the first image pickup position side within the second angle range, the image pickup part 220 is turned against the biasing forces of the coiled springs 5A though 5C.

During the time the image pickup part 220 is brought into the predetermined third angle range (for example, within the range of 15 degrees to 30 degrees from the second image pickup position) from the first image pickup position toward the second image pickup position side after the image pickup part 22 is departed from the second angle range, the entire image pickup part 220 is separated from the main body side cam part. During that time, no turn biasing force acts on the image pickup part 220, and the image pickup part 220 is turned against the frictional resistance caused by the braking member 34 of the hinge apparatus 1. Accordingly, the image pickup part 220 can be stopped at any desired position by the frictional resistance of the braking member 34.

When the image pickup part 220 reaches the third angle range, the second cam part 225 of the image pickup part 220 comes into contact with the main body side cam part. When the image pickup part 220 is further turned toward the second image pickup position side so as to be brought into the third angle range, the hinge shaft unit 3 of the hinge apparatus 1 is moved leftward in FIGS. 19 and 20 from the neutral position by the second cam part 22 and the main body side cam part in accordance with the turning motion of the image pickup part 220. However, since the hinge apparatus 1 is almost counter-rotated together with the image pickup part 220 at that time, the hinge shaft unit 3 is moved rightward in FIG. 1 against the biasing forces of the coiled springs 6A through 6C. When the image pickup part 220 is turned to the end part on the second image pickup position side of the third angle range, the coiled springs 6A through 6C are compressed the most. As apparent from this, when the image pickup part 220 is made freely turnable within the third angle range, the image pickup part 220 is turned to the end part on the first image pickup position side within the third angle range by the biasing forces of the coiled springs 6A through 6C.

When departing from the third angle range toward the second image pickup position side, the image pickup part 220 is immediately brought into the predetermined fourth angle range (for example, within a range of 15 degrees from the second image pickup position toward the first image pickup position side). Then, the image pickup part 220 is turned toward the second image pickup position side by the coiled springs 6A through 6C, the main body side cam part and the second cam part 225. Accordingly, in case the image pickup part 220 is turned from the second image pickup position side toward the first image pickup position side within the fourth angle range, the image pickup part 220 is turned against the biasing forces of the coiled springs 6A through 6C. When the image pickup part 220 reaches the second image pickup position, the hinge shaft unit 3 is located at the neutral position and the main body side cam part and the second cam part 225 are engaged with each other in a stable manner. Accordingly, the image pickup part 220 is held in the second image pickup position.

In case the image pickup part 220 is turned reversely from the second image pickup position toward the first image pickup position, the hinge apparatus 1, the main body side can part and the first, second cam parts 224, 225 are merely operated in the reverse way to the way just mentioned above and so, description thereof is omitted.

It should be noted that the present invention should not be limited to the above embodiment but many changes and modifications can be made in accordance with necessity.

For example, in the above embodiment, although the hinge shaft 32 is turnably supported by the hinge man body through the supporting member 31 such that the hinge shaft 32 is movable in the direction orthogonal to the direction of the rotation axis, it is also accepted that the hinge shaft 32 is turnably supported directly by the hinge main body 2 such that the hinge shaft 32 is movable in the direction orthogonal to the direction of the rotation axis.

Moreover, in the above embodiment, although the first and second guide protrusions 21b, 22b are formed on the first and second upper and lower sliding surfaces 21a, 22a, respectively, which are arranged away from each other in the up and down direction, the guide protrusion may be formed on one of the first and second sliding surfaces 21a, 22a. Of course, in that case, only of the first and second guide recesses 21c, 21d is formed on the supporting member 31.

### Industrial Applicability

A hinge apparatus according to the present invention can be utilized as a hinge apparatus for connecting a transmission section and a reception section of a cellular telephone set, or as a hinge apparatus for connecting a main body part and an image pickup part of a digital camera.

## Claims

1. A hinge apparatus comprising a hinge main body, a hinge shaft supported by said hinge main body such that said hinge shaft is turnable and movable in a direction orthogonal to a rotation axis of said hinge shaft, and first and second biasing means for respectively biasing said hinge shaft in one and the other directions in the moving direction of said hinge shaft.

2. A hinge apparatus according to claim 1, further comprising a supporting member disposed at said hinge main body such that said supporting member is movable in the moving direction of said hinge shaft, said hinge shaft being turnably supported by said supporting member, said hinge shaft being biased by said first and second biasing means through said supporting member.

3. A hinge apparatus according to claim 1, further comprising a first and a second movable member supported by said hinge main body such that said first and second movable members are movable in the moving direction of said hinge shaft and arranged on opposite sides in the moving direction of said hinge shaft, said hinge shaft being biased by said first and second biasing means through said first and second movable members.

4. A hinge apparatus according to claim 2, further comprising a first and a second movable member supported on said hinge main body such that said first and second movable members are movable in the moving direction of said hinge shaft and arranged on opposite sides of said supporting member in the moving direction of said hinge shaft, said hinge shaft being biased by said first and second biasing means through said first and second movable members and said supporting member.

5. A hinge apparatus according to claim 4, wherein said hinge main body is provided with a first and a second sliding surface extending in mutual parallel relation in the moving direction of said hinge shaft and slidingly contacted with one and the other side parts of said supporting member, respectively, said first and second sliding surfaces being provided with a first and a second guide protrusion extending, respectively, in the moving direction of said hinge shaft, and one and the other side parts of said supporting member, which are in slide contact with said first and second sliding surfaces, being provided with a first and a second guide recess for allowing said first and second protrusions to be fixed therein, respectively, such that said first and second guide protrusions are slidable in the moving direction of said hinge shaft but non-movable in the direction of the rotation axis of said hinge shaft.

6. A hinge apparatus according to claim 4, wherein said hinge main body is provided with a first stopper for prohibiting said first movable member from moving toward said second movable member side together with said supporting member when said supporting member moves toward said second member side beyond a predetermined neutral position, and a second stopper for prohibiting said second movable member from moving towards said first movable member side together with said supporting member when said supporting member moves toward said first movable member side beyond said neutral position.

7. A hinge apparatus according to claim 6, wherein said hinge main body is provided with a first and a second sliding surface extending in mutual parallel relation in the moving direction of said hinge shaft and slidingly contacted with one and the other side parts of said supporting member, respectively, said first and second sliding surfaces being provided with a first and a second guide protrusion extending, respectively, in the moving direction of said hinge shaft, and one and the other side parts of said supporting member, which are in slide contact with said first and second sliding surfaces, being provided with a first and a second guide recess for allowing said first and second protrusions to be fixed therein, respectively, such that said first and second guide protrusions are slidable in the moving direction of said hinge shaft but non-movable in the direction of the rotation axis of said hinge shaft.

8. A hinge apparatus according to claim 7, wherein said first movable member is provided at the end part on said supporting member side with a first engagement recess for allowing the end part on said first movable member side of at least one of said first and second guide protrusions and a first engagement protrusion disposed at said supporting member to fit therein such that they are slidable in the moving direction of said hinge shaft but non-movable in the direction of the axis of said hinge shaft, when said hinge shaft is located in said neutral position, and the end part on said supporting member side of said second movable member is provided with a second engagement recess for allowing the end part on said second movable member side of at least one of said first and second guide protrusions and a second engagement protrusion disposed at said supporting member to fit therein such that they are slidable in the moving direction of said hinge shaft but non-movable in the direction of the axis of said hinge shaft, when said hinge shaft is located in said neutral position.

9. A hinge apparatus according to claim 8, wherein the end face on said first movable member side of said first guide protrusion fitted to said first engagement recess is collided with a bottom surface of said first engagement recess, thereby serving as a first stopper for prohibiting said first movable member from moving toward said second movable member side, and the end face on said second movable member side of said second guide protrusion fitted to said second engagement recess is collided with a bottom surface of said second engagement recess, thereby serving as a second stopper for prohibiting said second movable member from moving toward said first movable member side.
